(19) Europäisches Patentamt
European Patent Office
Office européen des brevets

(11) EP 4 682 991 A1

(12) EUROPEAN PATENT APPLICATION
published in accordance with Art. 153(4) EPC

(43) Date of publication:
**21.01.2026 Bulletin 2026/04**

(21) Application number: **23927567.0**

(22) Date of filing: **18.10.2023**

(51) International Patent Classification (IPC):
***H01M 4/62*** *(2006.01)* ***H01M 4/13*** *(2010.01)*

(52) Cooperative Patent Classification (CPC):
**H01M 4/13; H01M 4/62; H01M 10/052;** Y02E 60/10

(86) International application number:
**PCT/JP2023/037627**

(87) International publication number:
**WO 2024/189952 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.03.2023 JP 2023039193**

(71) Applicant: **Nippon Paper Industries Co., Ltd.**
**Tokyo 114-0002 (JP)**

(72) Inventors:
- **AIMI, Hikaru**
  **Tokyo 114-0002 (JP)**
- **SHINDO, Hiroki**
  **Tokyo 114-0002 (JP)**
- **NISHIMORI, Yoshito**
  **Tokyo 114-0002 (JP)**

(74) Representative: **Kuhnen & Wacker**
**Patent- und Rechtsanwaltsbüro PartG mbB**
**Prinz-Ludwig-Straße 40A**
**85354 Freising (DE)**

# (54) NEGATIVE ELECTRODE ADDITIVE, NEGATIVE ELECTRODE, AND SECONDARY BATTERY

(57) This negative electrode additive contains a lignin component containing at least a lignin derivative, in which a mass ratio of an extracted component amount to a methoxy group amount per solid content of the lignin component is 0.005 to 0.25, an extracted component amount per solid content of the lignin component is 0.05 to 2.5 mass%, and a methoxy group amount per solid content of the lignin component is 3 to 18 mass%.

EP 4 682 991 A1

## Description

### Technical Field

The present invention relates to a negative electrode additive used for a negative electrode of a secondary battery, a negative electrode using the same, and a secondary battery.

### Background Art

In recent years, with the rapid spread of small portable terminals and stationary storage batteries typified by smartphones, tablets, and the like, there is an increasing demand for small and high energy density batteries for driving them.

In general, a graphite-based material is used for negative electrodes of lithium ion secondary batteries, but in the present situation, the limit of the capacity of the graphite-based material, which is 372 mAh/g on a theoretical basis ($LiC_6$), is approached.

Further, in order to improve the energy density of the lithium ion secondary batteries, it is necessary to select a new material. Therefore, materials obtained by alloying lithium with silicon, tin, or the like having the second lowest potential after carbon and lithium and having a large specific capacity have attracted attention.

Among these materials, silicon can occlude up to 4.4 lithium atoms with respect to 1 silicon atom in a molar ratio, and theoretically has a capacity about 10 times that of the graphite-based carbon material. However, when the silicon particles occlude lithium, the volume of the silicon particles swells to about three to four times, and therefore deterioration progresses due to repetition of charging and discharging, and there is a problem that the capacity decreases. When this phenomenon is analyzed in detail, it has been confirmed that when lithium is inserted into the active material containing silicon, fine cracks are generated in the electrode due to volume expansion, the electrolytic solution enters the fine cracks, and a new coating (SEI layer) is formed. At this time, irreversible capacity that does not return to the original capacity is generated, and as a result, the battery capacity decreases. This phenomenon appears in a change in charge-discharge efficiency during the cycle. In particular, the decrease in the cycle efficiency at the initial stage of the cycle where the volume change is large has a great influence on the life as a battery combined with a positive electrode having high charge-discharge efficiency. Therefore, when using an active material containing silicon, minimizing the changes in electrode structure due to the volume expansion becomes an important issue.

Patent Literature 1 describes that a negative electrode is produced by applying a negative electrode mixture slurry containing an electrode active material containing silicon and lignin sulfonate onto a current collector and drying the slurry to form a coating film (negative electrode active material layer) of the negative electrode mixture on the current collector. In addition, it is described that the battery using the negative electrode produced in this manner is excellent in capacity characteristics.

However, since the negative electrode mixture slurry described in Examples of Patent Literature 1 has an excessively large total content ratio of lignin and carboxymethyl cellulose which are components other than the active material, it is considered that a battery obtained using a negative electrode prepared using this slurry has excessively low performance to withstand actual use.

### Citation List

#### Patent Literature

Patent Literature 1: European Patent Application Publication No. 3544099

### Summary of Invention

#### Technical Problem

The silicon-based active material contained in the negative electrode mixture slurry described in Examples of Patent Literature 1 is about 60% on a solid content basis, but when the blending amount of the silicon-based active material is increased, there is a problem that satisfactory battery characteristics cannot be obtained because deterioration due to repeated charging and discharging progresses.

An object of the present invention is to provide a negative electrode additive capable of suppressing deterioration due to repeated charging and discharging even when a negative electrode containing a silicon-based active material is used as the negative electrode active material, and capable of obtaining a secondary battery excellent in battery performance such as a capacity retention ratio.

Solution to Problem

As a result of intensive studies, the present inventors have found that the above problems can be solved by containing a lignin component in which the content ratio of an extracted component is within a specific range.

The present invention provides the following.

(1) A negative electrode additive for a secondary battery, the additive containing a lignin component including at least a lignin derivative, in which a mass ratio of an extracted component amount to a methoxy group amount per solid content of the lignin component is 0.005 to 0.25, an extracted component amount per solid content of the lignin component is 0.05 to 2.5 mass%, and a methoxy group amount per solid content of the lignin component is 3 to 18 mass%.

(2) The negative electrode additive according to (1), in which a total decomposition product yield by alkaline nitrobenzene oxidation per solid content of the lignin component is 15% or less.

(3) The negative electrode additive according to (1), in which the lignin derivative has a functional group represented by Formula (1) below, and an S content in the functional group is 1.0 to 6.5 mass%.

Formula (1): $-SO_3M$ (In the formula, M represents a hydrogen atom, a monovalent metal, or a divalent metal.)

(4) A negative electrode for a secondary battery, containing a negative electrode active material layer including the negative electrode additive according to (1), a negative electrode binder, and a negative electrode active material.

(5) A secondary battery containing the negative electrode according to (4).

(6) The negative electrode additive according to (1), in which the secondary battery is a lithium ion battery.

Advantageous Effects of Invention

According to the present invention, it is possible to provide a negative electrode additive capable of suppressing deterioration due to repeated charging and discharging even when a negative electrode containing a silicon-based active material is used as the negative electrode active material, and capable of obtaining a secondary battery excellent in battery performance such as a capacity retention ratio.

Description of Embodiments

Hereinafter, the present invention will be described in detail. In the present invention, "to" includes an end value. That is, "X to Y" includes values X and Y at both ends thereof.

<<Negative Electrode Additive>>

The negative electrode additive of the present invention is used for a negative electrode of a secondary battery. The negative electrode additive of the present invention contains a lignin component containing at least a lignin derivative, and the mass ratio of the extracted component amount to the methoxy group amount per solid content of the lignin component is 0.005 to 0.25.

(Lignin Component)

In the present invention, the lignin component contains at least a lignin derivative.

(Lignin Derivative)

In the present specification, the lignin derivative means a decomposition product of lignin, a derivative of lignin, or a derivative of a decomposition product of lignin. The lignin derivative may be in the form of powder or liquid. The method for preparing the liquid lignin component is not particularly limited, and examples thereof include a method in which a powdery lignin component is dissolved in an appropriate solvent (for example, water, sodium hydroxide aqueous solution, and the like) to obtain a liquid lignin component.

Lignin derivatives are usually derived from wood biomass, and are classified into several types having different structures and physical properties depending on the treatment method. Examples of the lignin derivative include lignin sulfonic acid, lignin sulfonate, kraft lignin, soda lignin, soda-anthraquinone lignin, organosolv lignin, blasting lignin, sulfuric acid lignin, and decomposition products thereof.

The lignin derivative is preferably modified from the viewpoint of improving the dispersibility of materials other than CMC contained in the negative electrode mixture composition. Examples of the type of modification include modification by an alkali treatment, an alkali oxygen treatment, an oxidation treatment using an active oxygen species such as ozone or hydrogen peroxide, and modification of an aromatic nucleus by sulfomethylation. From the viewpoint of

improving dispersibility in materials other than CMC contained in the negative electrode mixture composition, it is preferable to include modification by an alkali treatment, an alkali oxygen treatment, and a sulfomethylation treatment. Sulfomethylated lignin can be obtained by sulfomethylating raw material lignin, and as raw materials, kraft lignin, soda lignin, soda-anthraquinone lignin, organosolv lignin, blasting lignin, lignin sulfonate, sulfuric acid lignin, decomposition products thereof, derivatives thereof, and the like can be used. The lignin derivative may be one kind or a combination of two or more kinds. Since there is a relationship that the higher the degree of modification, the lower the total decomposition product yield due to alkaline nitrobenzene oxidation, the degree of modification can be determined by measuring the total decomposition product yield.

(Extracted Component)

The lignin component usually contains an extracted component. In the present specification, the extracted component is an extracted component of plants (for example, plants used as pulp raw materials, preferably wood from the genera *Cryptomeria, Chamaecyparis, Pinus, Larix, Abies,* and *Eucalyptus*), and is usually a minor component measured and identified by subjecting wood to an extraction treatment using an organic solvent. Among the extracted components, those having a phenolic hydroxyl group or a carboxy group can also be obtained by extraction using an alkali. The extracted components are generally considered to be determinants of wood properties such as color tone, odor, durability, adhesiveness, and biological activity, and are said to be components that chemically characterize the wood. A tree is fully developed as a biological material only after skeleton of a tree is formed through the accumulation of cellulose and hemicellulose, and the deposition of lignin, and subsequently, the accumulation of extracted components in conjunction with heartwood formation. Examples of the organic solvent used in obtaining the extracted component include hexane, benzene, ether, acetone, and alcohol. The content of the extracted component in wood is usually about 5% or less.

The extracted component usually contains a low molecular weight compound. Many of them are secondary metabolites having a molecular weight of several thousand or less, and are generally extremely diverse, but are roughly classified into aromatic extracted components and terpenoids. Examples of the aromatic extracted component include flavonoids, tannins, lignans, and stilbenes. The extracted component contains at least one selected from these.

Flavonoids are a generic term for compounds having a diphenylpropane ($C_6$-$C_3$-$C_6$) skeleton, and examples thereof include flavone, flavanone, chalcone, aurone, isoflavone, catechin, and leucoanthocyanidin. The tannins may be either hydrolyzed tannin or condensed tannin. Hydrolyzed tannins are tannins having a structure in which glucose or the like is used as a nucleus and phenol carboxylic acids such as gallic acid are ester-bonded thereto, and examples thereof include gallotannins and ellagitannins. The hydrolyzed tannin can be decomposed into simple fragments by hydrolysis with an acid, an alkali, or the like, and when gallotannin and ellagtannin are hydrolyzed, gallic acid and ellagic acid are obtained, respectively. Examples of the condensed tannin include amorphous polymers containing catechins or leucoanthocyanidins as precursors.

Examples of the lignans include lignans and related substances thereof. Lignan (resinol) has a structure in which the same phenylpropane unit as the constituent unit of lignin has a $C_6$-$C_3$-$C_3$-$C_6$ skeleton in which carbon-carbon bonds are formed between the $\beta$-positions of the side chains. Unlike lignin, lignan has an asymmetric carbon in the molecule and has optical activity. Examples of the lignan-related substance include norlignans having a $C_6$-$C_3$-$C_2$-$C_6$ skeleton having one carbon number smaller than that of a lignin skeleton. The stilbenes may be any compound having an $\alpha,\beta$-diphenylethylene skeleton.

The terpenoid may be a series of compounds in which two or more isoprene units ($C_5H_8$) are linked in a chain or ring shape. Terpenoids composed of 2, 3, 4, and 6 isoprenoid units are referred to as monoterpene (10 carbon atoms), sesquiterpene (15 carbon atoms), diterpene (20 carbon atoms: for example, abietic acid), and triterpene (30 carbon atoms), respectively, and may be any of these.

The extracted component has various physiological activities depending on the basic carbon skeleton and substituents of the extracted component. Examples of the physiological activity include biological activity ("Biodegradation resistance of wood by extracted components", Wood Storage 34(2), 48-54, 2008) against microorganisms, insects, and plants, improvement of durability of a material, an inhibitory effect on health of a human body, and an inhibitory effect on chemical and physical processing (for example, pulping, bleaching, and cement curing) of a material.

(Extracted Component/Lignin Component (Mass Ratio))

In the lignin component, the mass ratio of the extracted component amount to the methoxy group amount per solid content of the lignin component is 0.005 to 0.25, preferably 0.008 to 0.2, and more preferably 0.01 to 0.15 from the viewpoint that lignin and the extracted component are highly oriented in the negative electrode. When the mass ratio is in the above range, lignin and the extracted component can be highly oriented in the negative electrode. When the mass ratio is excessively larger than the above range, the extracted component amount as an impurity increases, and thus the battery performance deteriorates, and when the mass ratio is excessively small, the lignin and the extracted component cannot be

oriented in the negative electrode.

The extracted component may influence the orientation in the negative electrode component, in particular with lignin. In addition, since methoxy groups bonded to aromatic nuclei are generally present in the structure of lignin, the methoxy group amount is an indicator of the content of lignin derivatives. Therefore, the above mass ratio can be said to represent a balance for highly orienting lignin and an extracted component in the negative electrode.

(Methoxy Group Amount)

The methoxy group amount per solid content of the lignin component is preferably 3 to 18 mass%, and more preferably 5 to 15 mass% from the viewpoint of using high purity lignin. Since there are generally methoxy groups bound to aromatic nuclei in the structure of lignin, the methoxy group amount is an indicator of the content of lignin and lignin derivatives, that is, the purity of lignin and lignin derivatives.

(Extracted Component Amount)

The extracted component amount per solid content of the lignin component is preferably 0.05 to 2.5 mass%, and more preferably 0.1 to 2.0 mass% from the viewpoint of affecting the orientation of the lignin in the negative electrode component, in particular, with the lignin.

The methoxy group amount can be measured by a methoxy group quantification method (refer to "Lignin Chemistry Research Method", pp. 336 to 340, 1994, published by Japan UNI Agency, Inc.) by Viebock and Schwappach Method. The extracted component amount can be measured by the method for measuring for hexane extractable materials described in JIS K 0102:2019.

(Total Decomposition Product Yield)

The total decomposition product yield of the lignin component due to alkaline nitrobenzene oxidation (also simply referred to as "total decomposition product yield") is preferably 15% or less, more preferably 2% or more and 13% or less from the viewpoint of improving the dispersibility of materials other than CMC contained in the negative electrode mixture composition. When the total decomposition product yield is within the above range, dispersibility of materials other than CMC contained in the negative electrode mixture composition can be improved, and battery performance can be improved. When the total decomposition product yield is excessively higher than the above upper limit value, dispersibility of materials other than CMC contained in the negative electrode mixture composition is particularly insufficient, and there is a problem that battery performance deteriorates. On the other hand, when the total decomposition product yield is excessively lower than the above lower limit value, there is a problem that the degree of modification of lignin is excessively high, the characteristics as lignin disappear, and various kinds of performance derived from lignin cannot be exhibited. It is to be noted that the lower the total decomposition product yield, the higher the degree of modification of lignin. Here, the measurement of the total decomposition product yield can be quantified by the method described in "Plant Cell Wall Experimental Methods" ("Plant Cell Wall Experimental Methods", pp.128 to 131, 2016, published by Hirosaki University Press). The total decomposition product yield can be determined from the ratio (w/w%) of the total weight of the six decomposition products (p-hydroxybenzaldehyde, p-hydroxybenzoic acid, vanillin, vanillic acid, syringaldehyde, syringic acid) obtained by measurement to the sample solid content.

In addition, the lignin derivative used in the present invention preferably has a functional group (sulfo group) represented by the following Formula (1), and from the viewpoint of compatibility with a binder component including CMC, the S content in the functional group is 1.0 to 6.5 mass%, preferably 1.2 to 6.0 mass%, and more preferably 1.5 to 6.0 mass%. When the S content is excessively large, compatibility with binder components including CMC deteriorates.

Formula (1): $-SO_3M$ (In the formula, M represents a hydrogen atom, a monovalent metal, or a divalent metal.)

(S Content)

Here, the S content in the functional group refers to the content of sulfur atoms contained in the functional group with respect to the solid content of the lignin derivative. Specifically, the S content is a value calculated by the following Formula (2).

S content (mass%) = total S content (mass%) - inorganic S content (mass%) Formula (2):

In Formula (2), the total S content and the inorganic S content of the lignin derivative both represent the S content relative to the solid content of the lignin derivative. In Formula (2), the total S content is the total S content contained in the

lignin derivative and can be quantified by ICP emission spectroscopy. In addition, the inorganic S content can be calculated from the total amount of the $SO_3$ ion content, the $SO_4$ ion content, and the $S_2O_3$ ion content quantified by ion chromatography.

(Lignin Sulfonic Acid, Lignin Sulfonate)

Lignin sulfonic acid and lignin sulfonate are lignin derivatives having sulfo groups prepared from lignocellulose raw materials through sulfite treatment. Examples of the method for preparing lignin sulfonic acid and lignin sulfonate include a method in which lignocellulose raw material or lignin itself is subjected to sulfite treatment, and a method in which lignocellulose raw material or lignin itself is preferably subjected to sulfite pulping treatment.

(Lignocellulose Raw Material)

The lignocellulose raw material is not particularly limited as long as the lignocellulose raw material contains lignocellulose in the constituent. Examples thereof include pulp raw materials such as wood and non-wood. Examples of the wood include softwood such as spruce, red pine, Japanese cedar, and Japanese cypress, and hardwood such as birch and beech. The tree age and the collection site of wood are not limited. Therefore, wood collected from trees having different tree ages or wood collected from different parts of trees may be used in combination. Examples of the non-wood include bamboo, kenaf, reed, and rice plant. The lignocellulose raw materials may be used singly or in combination of two or more kinds thereof.

Lignin sulfonic acid and lignin sulfonate may be prepared from raw materials other than lignocellulose raw materials, for example, lignin. Examples of the lignin include a naturally occurring lignin and an artificially produced lignin (for example, dehydrogenation polymers of hydroxycinnamyl alcohol analogs), and either can be used. The preparation of lignin sulfonic acid and lignin sulfonate from lignin can be performed, for example, by a method of decomposing and sulfonating lignin.

(Sulfite Treatment)

The sulfite treatment can be performed by bringing at least one of sulfurous acid and a sulfite into contact with the lignocellulose raw material. The conditions for the sulfite treatment are not particularly limited as long as sulfo groups can be introduced into the $\alpha$ carbon atoms of the side chains of lignin contained in the lignocellulose raw material.

The sulfite treatment is preferably performed by a sulfite pulping method. As a result, the lignin in the lignocellulose raw material can be more quantitatively sulfonated. The sulfite pulping method is a method in which a lignocellulose raw material is reacted at a high temperature in a solution of at least one of sulfurous acid and a sulfite (for example, aqueous solution: pulping liquid). This method is industrially established and implemented as a method for producing a sulfite pulp, and thus is advantageous in terms of economy and ease of implementation.

In the case of performing sulfite pulping, examples of salts of sulfites include magnesium salts, calcium salts, sodium salts, and ammonium salts.

The concentration of sulfite ($SO_2$) in the solution of at least one of sulfurous acid and a sulfite is not particularly limited, but the ratio of the mass (g) of $SO_2$ to 100 mL of the reaction chemical solution is preferably 1 g/100 mL or more, and more preferably 2 g/100 mL or more when sulfite pulping is performed. The upper limit is preferably 20 g/100 mL or less, and more preferably 15 g/100 mL or less when sulfite pulping is performed. The $SO_2$ concentration is preferably 1 g/100 mL to 20 g/100 mL, and more preferably 2 g/100 mL to 15 g/100 mL in the case of performing sulfite pulping.

The pH value of the sulfite treatment is not particularly limited, but is usually 10 or less. When sulfite pulping is performed, it is preferably performed under acidity, more preferably pH 5 or less, and still more preferably pH 3 or less. Thereby, the lignin derivative (for example, lignin sulfonate) can be efficiently taken out, and higher quality pulp can be obtained. The lower limit of the pH value is preferably 0.1 or more, and more preferably 0.5 or more when sulfite pulping is performed. The pH value in the sulfite treatment is preferably 0.1 to 10, and in the case of performing sulfite pulping, the pH value is more preferably 0.5 to 5, and still more preferably 0.5 to 3.

The temperature of the sulfite treatment is not particularly limited, but is preferably 170°C or lower, and more preferably 150°C or lower in the case of performing sulfite pulping. The lower limit is preferably 70°C or higher, and more preferably 100°C or higher when sulfite pulping is performed. The temperature condition of the sulfite treatment is preferably 70 to 170°C, and more preferably 100°C to 150°C in the case of performing sulfite pulping.

The treatment time of the sulfite treatment is not particularly limited, and is preferably 0.5 to 24 hours and more preferably 1.0 to 12 hours although the treatment time depends on various conditions of the sulfite treatment.

In the sulfite treatment, it is preferable to add a compound that supplies a counter cation (salt: containing the substituent M of the group represented by Formula (1)). By adding a compound that supplies a counter cation, the pH value in the sulfite treatment can be kept constant. Examples of the compound that supplies the counter cation include MgO,

$Mg(OH)_2$, CaO, $Ca(OH)_2$, $CaCO_3$, $NH_3$, $NH_4OH$, NaOH, $NaHCO_3$, and $Na_2CO_3$. The counter cation is preferably a calcium ion, a magnesium ion, or a sodium ion.

When a solution of at least one of sulfurous acid and sulfite is used in the sulfite treatment, the solution may contain the counter cation (salt) and a pulping penetration agent (for example, cyclic ketone compounds such as anthraquinone sulfonate, anthraquinone, and tetrahydroanthraquinone) in addition to $SO_2$ as necessary.

There is no limitation on the equipment used for performing the sulfite treatment, and for example, generally known equipment for producing a dissolving pulp and the like can be used.

The separation of the intermediate product from the solution of at least one of sulfurous acid and sulfite may be performed according to a conventional method. Examples of the separation method include a separation method for separating the sulfite pulping waste liquid after sulfite pulping (for example, filtration).

Another example of a method for producing lignin sulfonic acid and lignin sulfonate includes a method for sulfonating kraft lignin, as described later in the present specification. The method for sulfonating kraft lignin may follow sulfation by a normal sulfite treatment or sulfite pulping treatment, but is not particularly limited, and other methods may be adopted.

Lignin sulfonic acid (for example, an insoluble product of a sulfite solution is obtained as a filtrate or a filtration residue after filtration, preferably as a filtrate) and lignin sulfonate obtained by the sulfite treatment may be used as they are or as a lignin derivative which is an active ingredient after being concentrated as necessary. On the other hand, other processing may be further performed as necessary. Thereby, a lignin derivative having high purity and/or an appropriate degree of sulfonation (S content) can be obtained. Examples of the other treatment include an alkali treatment, an oxidation treatment, a dialysis treatment, and a combination thereof.

(Alkali Treatment)

The alkali treatment is preferably performed on the filtration residue (insoluble matter) after the sulfite treatment, the filtrate, and the treated product after the dialysis treatment. The alkali treatment may be performed by subjecting the target sample to an alkaline condition. The term "under alkaline conditions" generally refers to being under an aqueous solution having a pH value of 8 or more, preferably a pH value of 9 or more. The upper limit of the pH value is usually 14.

In the alkali treatment, the alkaline substance is usually brought into contact with the sulfite treated product. The alkaline substance is not particularly limited, and examples thereof include calcium hydroxide, magnesium hydroxide, sodium hydroxide, potassium hydroxide, sodium carbonate, and ammonia. Among them, sodium hydroxide and calcium hydroxide are preferable. The alkaline substances may be used singly or in combination of two or more kinds thereof.

Examples of the method for bringing an alkaline substance into contact with the sulfite treated product include a method of preparing a dispersion liquid or a solution (for example, an aqueous dispersion or an aqueous solution) of the sulfite treated product and adding an alkaline substance to the dispersion liquid or the solution, and a method of adding a solution or a dispersion (for example, an aqueous dispersion or an aqueous solution) of an alkaline substance to the sulfite treated product.

The temperature of the alkali treatment is not particularly limited, but is preferably 40°C or higher, and more preferably 60°C or higher. The upper limit is preferably 150°C or lower, more preferably 140°C or lower, and still more preferably 130°C or lower.

The amount of the alkaline substance in the alkali treatment is preferably 0.5 to 40 mass%, and more preferably 1.0 to 30 mass% with respect to the solid content mass of the sulfite treated product, or with respect to the mass of the aqueous solution or dispersion in the case of preparing an aqueous solution or dispersion in which the alkali treated extract is dispersed in an aqueous solvent (for example, water).

The time for the alkali treatment is not particularly limited, but is preferably 0.1 hours or more, and more preferably 0.5 hours or more. The upper limit is preferably 10 hours or less, and more preferably 6 hours or less.

Prior to the alkali treatment, dissolution and dispersion treatment of the sulfite treated product, and adjustment of the concentration (preparation of a solution or dispersion of an aqueous solvent such as water) may be performed as necessary. The dispersion treatment can be performed by passing through a disc refiner, adding to a mixer or a disperser, kneading, or the like. The concentration can be adjusted using, for example, an aqueous solvent such as water.

(Oxidation Treatment)

The oxidation treatment can be performed on the treated product obtained after the sulfite treatment (for example, filtrate after filtration) or the treated product after the alkali treatment. The oxidation treatment may be appropriately performed using an oxidizing agent, and when the oxidizing agent is a gas, the oxidation treatment can be performed by passing the gas into the filtrate. When the oxidizing agent is a liquid, the oxidation treatment can be performed by adding the liquid to a filtration residue or a filtrate. The oxidizing agent is preferably air, oxygen, hydrogen peroxide, ozone, or a combination thereof. The oxidation treatment is preferably performed under alkaline conditions

(alkaline oxidation treatment). The treatment pH of the alkaline oxidation treatment is usually 8 or more, preferably 10 or more, and more preferably 12 or more. The temperature of the oxidation treatment is usually 20 to 200°C, and preferably 50 to 180°C. The time for the oxidation treatment is usually preferably 0.1 hours or more, and more preferably 0.5 hours or more. The upper limit is preferably 5 hours or less, and more preferably 3 hours or less.

(Dialysis Treatment or UF Treatment)

The dialysis treatment can be performed on the treated product obtained after the sulfite treatment (for example, filtrate after filtration). Examples of the dialysis membrane include cellulose-based membranes such as cellulose acetate, and synthetic polymer-based membranes such as ethylene vinyl alcohol, polyacrylonitrile, polymethyl methacrylate, polysulfone, and polyether sulfone, and the molecular weight fraction is usually 5,000 to 100,000, preferably 7,000 to 80,000, and more preferably 10,000 to 50,000.

Instead of dialysis treatment, UF treatment can be used. As the UF membrane, a known UF membrane can be used. Examples thereof include a hollow fiber membrane, a spiral membrane, a tubular membrane, and a flat membrane. As a material of the UF membrane, a known material can be used. Examples thereof include cellulose acetate, aromatic polyamide, polyvinyl alcohol, polysulfone, polyvinylidene fluoride, polyethylene, polyacrylonitrile, and ceramic. The UF membrane may be a commercially available product.

The molecular weight cutoff of the UF membrane is preferably 5,000 to 30,000, more preferably 10,000 to 25,000, and still more preferably 15,000 to 23,000. When the UF membrane having a molecular weight cutoff of 5,000 or more is used, it is possible to prevent the separation rate of the treatment liquid from being excessively slow. In addition, when a UF membrane having a molecular weight cutoff of 30,000 or less is used, it is possible to prevent lignin from being not separated from the treatment liquid.

The concentration ratio by the UF treatment using the UF membrane can be set randomly. That is, the UF treatment may be stopped when the outflow amount of the concentrated solution becomes a random amount. The concentration is preferably 2 to 6 times. Concentrating 2 to 6 times means that the amount of original liquid (black liquor) is reduced to 1/2 to 1/6.

The temperature of the treatment liquid during the UF treatment is not particularly limited. For example, the temperature is preferably 20 to 80°C, and more preferably 20 to 70°C in consideration of the heat resistance of the UF membrane material. The pH value of the treatment liquid during the UF treatment is preferably 2 to 11. The solid content concentration (w/w) of the black liquor during the UF treatment is preferably 2 to 30%, and more preferably 5 to 20%.

(Kraft Lignin)

Kraft lignin is also called thiolignin or sulphate lignin. Kraft lignin can be obtained by, for example, precipitating a black liquor obtained by kraft pulping a lignocellulose raw material by adding an acid or the like.

The kraft pulping can be performed by placing wood chips, which are lignocellulose raw materials, in a pressure-resistant container together with a kraft pulping liquid containing caustic soda (NaOH) and sodium sulfide ($Na_2S$). The liquid ratio of the wood chips to the pulping liquid can be, for example, 1.0 to 40 L/kg, and is preferably 1.5 to 30 L/kg, and more preferably 2.0 to 30 L/kg. In still another aspect, the liquid ratio of the wood chips to the chemical solution can be, for example, 1.0 to 5.0 L/kg, and is preferably 1.5 to 4.5 L/kg, and more preferably 2.0 to 4.0 L/kg.

In the present invention, in the kraft pulping, various pulping aids can be used in combination in addition to caustic soda (NaOH) and sodium sulfide ($Na_2S$). For example, an alkaline pulping liquid containing 0.01 to 5 mass% of a quinone compound per bone-dry chip may be added to the pulping digester.

The quinone compound to be used is a quinone compound, a hydroquinone compound, or a precursor thereof as a so-called known pulping aid, and at least one compound selected from these compounds can be used. Examples of these compounds include: quinone compounds such as anthraquinone, dihydroanthraquinone (for example, 1,4-dihydroanthraquinone), tetrahydroanthraquinone (for example, 1,4,4a,9a-tetrahydroanthraquinone, 1,2,3,4-tetrahydroanthraquinone), methylanthraquinone (for example, 1-methylanthraquinone and 2-methylanthraquinone), methyldihydroanthraquinone (for example, 2-methyl-1,4-dihydroanthraquinone), and methyltetrahydroanthraquinone (for example, 1-methyl - 1,4,4a,9a-tetrahydroanthraquinone, 2-methyl-1,4,4a,9a-tetrahydroanthraquinone); hydroquinone compounds such as anthrahydroquinone (generally, 9,10-dihydroxyanthracene), methylanthrahydroquinone (for example, 2-methylanthrahydroquinone), dihydroanthrahydroanthraquinone (for example, 1,4-dihydro-9,10-dihydroxyanthracene), and alkali metal salts thereof (for example, the disodium salt of anthrahydroquinone and the disodium salt of 1,4-dihydro-9,10-dihydroxyanthracene); and precursors such as anthrone, anthranol, methylanthrone, and methylanthranol. These precursors have the potential to convert to quinone compounds or hydroquinone compounds under pulping conditions.

In the pulping liquid, the active alkali addition rate (AA) per mass of bone-dry wood chips can be 8 to 55 mass%, and is preferably 8 to 20 mass%. When the active alkali addition rate is less than 8 mass%, the removal of lignin and

hemicellulose is insufficient, and when the active alkali addition rate is more than 55 mass%, a decrease in yield and deterioration of quality occur. Here, the active alkali addition rate is obtained by converting the addition rate of NaOH and $Na_2S$ as the addition rate of $Na_2O$, and can be converted into the addition rate of $Na_2O$ by multiplying the addition rate of NaOH by 0.775. The degree of sulfurization is preferably in the range of 15 to 40%. In the region where the degree of sulfurization is less than 15%, a decrease in delignification property, a decrease in pulp viscosity, and an increase in residue content are caused.

Kraft pulping is preferably performed in a temperature range of 120 to 180°C, and more preferably 140 to 160°C. When the temperature is excessively low, delignification (reduction in kappa number) is insufficient, whereas when the temperature is excessively high, the polymerization degree (viscosity) of cellulose decreases. In addition, the pulping time in the present invention is a time from when the pulping temperature reaches the maximum temperature to when the temperature starts to decrease, but the pulping time is preferably 60 minutes or more and 600 minutes or less, and more preferably 120 minutes or more and 360 minutes or less. When the pulping time is less than 60 minutes, pulping does not proceed, and when the pulping time exceeds 600 minutes, pulp production efficiency deteriorates, which is not preferable.

After the kraft pulping is performed, filtration is performed, and the obtained alkaline black liquor (filtrate) is precipitated with an acid to prepare acid-precipitated kraft lignin. Examples of the method include a method for preparing powdered acid-precipitated kraft lignin (WO 2006/038863, WO 2006/031175, WO 2012/005677).

In addition, for example, the pH of the obtained alkaline black liquor is lowered to about 10 by passing carbon dioxide therethrough, precipitated lignin particles are separated by filtration, the separated lignin particles are suspended again, sulfuric acid is added to lower the pH to about 2, the obtained precipitate is separated by filtration, and the precipitate is washed with water, dried, or the like, whereby kraft lignin can be obtained.

(Soda Lignin)

Soda lignin can be obtained by precipitating a black liquor obtained by soda pulping a lignocellulose raw material by adding an acid or the like.

The soda pulping can be performed by placing wood chips, which are lignocellulose raw materials, in a pressure-resistant container together with a soda pulping liquid (sodium hydroxide aqueous solution). The liquid ratio of the wood chips to the pulping liquid can be, for example, 1.0 to 40 L/kg, and is preferably 1.5 to 30 L/kg, and more preferably 2.0 to 30 L/kg. In still another aspect, the liquid ratio of the wood chips to the pulping liquid can be, for example, 1.0 to 5.0 L/kg, and is preferably 1.5 to 4.5 L/kg, and more preferably 2.0 to 4.0 L/kg.

In the present invention, in the soda pulping, various pulping aids can be used in combination in addition to caustic soda (NaOH). For example, it is preferable to add an alkaline pulping liquid containing 0.01 to 5 mass% of a quinone compound per bone-dry chip to the pulping digester. When the added amount of the quinone compound is less than 0.01 mass%, the effect as an auxiliary cannot be sufficiently exhibited, and even when the added amount of the quinone compound exceeds 5 mass%, the auxiliary agent remains remarkably in pulp, and the quality and safety are affected when paper is produced from pulp. As the quinone compound, the same quinone compound as that described in kraft pulping can be used.

In the pulping liquid, the caustic soda addition rate per mass of bone-dry wood chips can be 1 to 50 mass%, and is preferably 10 to 30 mass%. When the active alkali addition rate is less than 1 mass%, the removal of lignin and hemicellulose is insufficient, and when the active alkali addition rate is more than 50 mass%, a decrease in yield and deterioration of quality occur.

Soda pulping is preferably performed in a temperature range of 120 to 180°C, and more preferably 140 to 160°C. When the temperature is excessively low, delignification (reduction in kappa number) is insufficient, whereas when the temperature is excessively high, the polymerization degree (viscosity) of cellulose decreases. In addition, the pulping time in the present invention is a time from when the pulping temperature reaches the maximum temperature to when the temperature starts to decrease, and the pulping time is preferably 60 minutes or more and 600 minutes or less, and more preferably 120 minutes or more and 360 minutes or less. When the pulping time is less than 60 minutes, pulping does not proceed, and when the pulping time exceeds 600 minutes, pulp production efficiency deteriorates, which is not preferable.

After the soda pulping is performed, filtration is performed, and the obtained alkaline black liquor (filtrate) is precipitated with an acid to prepare acid-precipitated soda lignin. For example, sulfuric acid is added to an alkaline black liquor to lower the pH to about 2, the obtained precipitate is separated by filtration, and the precipitate is washed with water, dried, or the like, whereby soda lignin can be obtained.

Kraft lignin and soda lignin obtained as described above may be further subjected to purification treatment as necessary to be used as a lignin derivative with increased purity. Furthermore, other processing may be further performed as necessary. The derivatization of lignin is not particularly limited, and for example, sulfomethylation may be performed.

(Sulfomethylated Lignin)

Kraft lignin, soda lignin, soda-anthraquinone lignin, organosolv lignin, blasted lignin, lignin sulfonate, sulfuric acid lignin, and the like, preferably kraft lignin and soda lignin, more preferably kraft lignin, are derivatized by introducing sulfo groups into aromatic nuclei via carbon by sulfomethylation, and can be used as sulfomethylated lignin.

In the sulfomethylation reaction of kraft lignin, a sulfo group is generally introduced into an aromatic nucleus via carbon at a position represented by the following general Formula (1) with respect to a $C_6$-$C_3$ unit of lignin. General Formula (1) represents a $C_6$-$C_3$ unit which is a partial structure of lignin. That is, in the reaction of the arrow on the left side, a sulfo group is introduced at the α-position, and is generally called sulfonation. On the other hand, in the reaction indicated by the arrow on the right side, a sulfo group is introduced into the 5-position of the aromatic nucleus via formaldehyde in addition to the α-position.

[Chemical Formula 1]

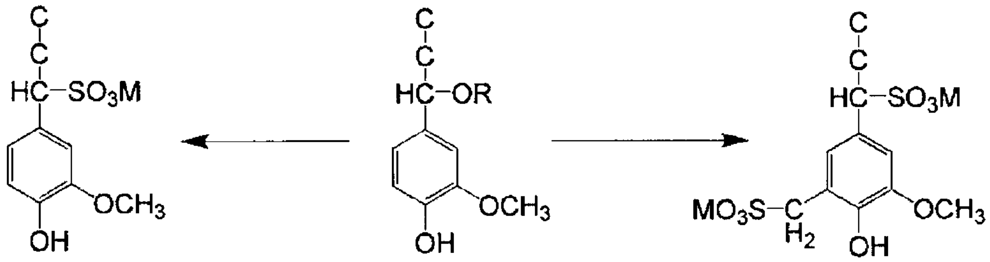

(In the general Formula (1): M represents a hydrogen atom, a monovalent metal, or a divalent metal.)

The sulfomethylated lignin may be produced by a known method, for example, by reacting kraft lignin or soda lignin with a sulfite and an aldehyde.

An example of a method of sulfomethylating lignin is disclosed in U.S. Patent No. 2,680,113. In this method, the sulfomethylation reaction of lignin is carried out in a temperature range of 50 to 200°C, preferably in a temperature range of 80 to 170°C, and more preferably in a temperature range of 90 to 160°C. The pH during the sulfomethylation reaction is preferably 8 or more.

The amount of the sulfite to be added is preferably 1 to 50 mass% with respect to lignin from the viewpoint of efficiently performing the reaction and preventing unreacted substances from remaining when the sulfite is excessively added.

As the aldehydes, formaldehyde is preferable. The amount of aldehyde added is preferably 0.25 to 12.5 mass% with respect to lignin. When formaldehyde is in such a range, the reaction of the arrow on the right side of the above general Formula (1) proceeds well, and sulfo groups are introduced via formaldehyde.

(Optional Components)

The lignin component may contain a component other than the extracted component mixed from the raw material when preparing the lignin derivative (for example, at the time of sulfite pulping), for example, an inorganic salt such as sodium sulfate, sodium sulfite, sodium chloride, magnesium sulfate, magnesium sulfite, magnesium chloride, calcium sulfate, calcium sulfite, calcium chloride, ammonium sulfate, ammonium sulfate, ammonium chloride, or sodium hydroxide.

(Negative Electrode)

The negative electrode of the present invention is used for a secondary battery, and includes a negative electrode active material layer containing the negative electrode additive of the present invention, a negative electrode binder, and a negative electrode active material.

The content of the negative electrode additive in the negative electrode active material layer is preferably 0.1 to 10 mass% and more preferably 0.2 to 8 mass% on a solid content basis. The content ratio of the negative electrode additive in the negative electrode active material layer is preferably 0.05 to 10 parts by mass, and more preferably 0.1 to 7 parts by mass based on 100 parts by mass of the negative electrode active material on a solid content basis.

(Negative Electrode Binder)

The negative electrode binder used in the present invention is not particularly limited as long as the negative electrode binder is a binder generally used for a negative electrode, and carboxymethyl cellulose or a salt thereof is preferably used from the viewpoint of high performance in the case of preparing a negative electrode in an aqueous system. In addition, the negative electrode binder may contain a binder other than carboxymethyl cellulose or a salt thereof. Examples of the other binders include synthetic rubber-based binders.

(Carboxymethyl Cellulose and/or Salt Thereof)

Carboxymethyl cellulose and/or a salt thereof (hereinafter sometimes abbreviated as "CMC") has a structure in which a hydroxyl group in a glucose unit constituting cellulose is substituted with a carboxymethyl ether group. The carboxymethyl cellulose may be in the form of a salt. Examples of the salt of carboxymethyl cellulose include metal salts such as sodium carboxymethyl cellulose.

In the present invention, cellulose means a polysaccharide having a structure in which D-glucopyranose (also simply referred to as "glucose unit" or "anhydroglucose") is linked by β,1-4 bonds. Cellulose is generally classified into natural cellulose, regenerated cellulose, fine cellulose, microcrystalline cellulose excluding non-crystalline regions, and the like from origin, production method, and the like.

Examples of the natural cellulose include bleached or unbleached pulp, purified linters, and cellulose produced by microorganisms such as acetic acid bacteria. The raw material of the bleached or unbleached pulp is not particularly limited, and examples thereof include wood, cotton, straw, and bamboo. The method for producing the bleached or unbleached pulp is also not particularly limited, and examples thereof include a mechanical method, a chemical method, or a method combining a mechanical method and a chemical method. Examples of the bleached or unbleached pulp include mechanical pulp, chemical pulp, crushed pulp, sulfite pulp, kraft pulp, and pulp for papermaking. Examples of the bleached or unbleached pulp include a chemically purified dissolving pulp which is a main raw material of artificial fibers, cellophane, and the like, and is mainly dissolved in a chemical to be used.

Examples of the regenerated cellulose include regenerated cellulose obtained by dissolving cellulose in a solvent such as a copper ammonia solution, a cellulose xanthate solution, or a morpholine derivative, and spinning the cellulose again.

Examples of the fine cellulose include fine cellulose obtained by depolymerizing a cellulose-based material such as natural cellulose or regenerated cellulose by acid hydrolysis, alkali hydrolysis, enzymatic decomposition, blasting, vibration ball milling, or the like, and fine cellulose obtained by mechanically treating a cellulose-based material.

In producing CMC, a known method for producing CMC can be applied. For example, CMC can be produced by treating cellulose with a mercerizing agent (alkali) to prepare mercerized cellulose (alkali cellulose), and then adding an etherifying agent to the mercerized cellulose to cause an etherification reaction.

As the raw material cellulose, the above-mentioned cellulose can be used without particular limitation, and a cellulose having a high cellulose purity is preferable, and a dissolving pulp or a linter is more preferable. By using these, CMC having high purity can be obtained.

Examples of the mercerizing agents include alkali metal hydroxide salts such as sodium hydroxide and potassium hydroxide. Examples of the etherifying agents include monochloroacetic acid and sodium monochloroacetate.

In a general method for producing a water-soluble carboxymethyl cellulose, the molar ratio of the mercerizing agent and the etherifying agent (mercerizing agent/etherifying agent) is generally 2.00 to 2.45 when monochloroacetic acid is used as the etherifying agent. The reason is that when the ratio is 2.00 or more, the etherification reaction can be sufficiently performed, and it is possible to prevent unreacted monochloroacetic acid from remaining and being wasted. When the content is 2.45 or less, it is possible to prevent the occurrence of a side reaction between an excessive mercerizing agent and monochloroacetic acid to produce an alkali metal glycolate, which is economical.

In the present invention, the CMC may be a commercially available product. Examples of the commercially available product include "SUNROSE" (trade name) manufactured by Nippon Paper Industries Co., Ltd.

(Degree of Substitution with Carboxymethyl Group)

CMC has a degree of substitution with carboxymethyl group per anhydroglucose unit (hereinafter may be referred to as a DS value) of 0.5 to 1.2. When the DS value is 0.5 or more, good solubility in water can be maintained, and generation of undissolved matter can be suppressed. In addition, when the DS value is 1.2 or less, an increase in the stringiness of the liquid can be suppressed, and the handling can be easily maintained. Therefore, the DS value of the CMC of the present invention is 0.5 to 1.2, preferably 0.5 to 1.0, and more preferably 0.6 to 1.0.

In addition, the method for measuring the degree of substitution of a carboxymethyl group is as follows.

About 2.0 g of a sample is precisely weighed, and placed in a 300 mL Erlenmeyer flask with a stopper. 100 mL of a

solution obtained by mixing 1,000 mL of methanol with 100 mL of special grade concentrated nitric acid is added, and the mixture is shaken for 3 hours to convert a salt of carboxymethyl cellulose (CMC) into H-CMC (hydrogen-type carboxymethyl cellulose). 1.5 to 2.0 g of the absolute dry H-CMC is precisely weighed, and is put into a 300 mL conical flask with a stopper. H-CMC is wet with 15 mL of 80% methanol, 100 mL of 0.1 N-NaOH is added, and the mixture is shaken at room temperature for 3 hours. Using phenolphthalein as an indicator, excess NaOH is back-titrated with 0.1 N-$H_2SO_4$, and the degree of carboxymethyl substitution (DS value) is calculated by the following formula.

$$A = [(100 \times F' - 0.1\ N\text{-}H_2SO_4\ (mL) \times F) \times 0.1] / (\text{bone-dry mass of H-CMC (g)})$$

$$\text{Degree of substitution with carboxymethyl group} = 0.162 \times A/(1 - 0.058 \times A)$$

F' : Factor of 0.1 N-$H_2SO_4$
F: Factor of 0.1 N-NaOH

(Viscosity)

The viscosity of a 1 mass% aqueous solution of CMC measured using a B-type viscometer (30 rpm) at 25°C is preferably 1,000 to 20,000 mPa·s, more preferably 1,000 to 15,000 mPa·s, and still more preferably 1,000 to 10,000 mPa·s. When the viscosity is excessively high, there are a problem that the slurry cannot be mixed well with the active material and the conductive auxiliary agent at the time of preparing the slurry and a problem that the slurry has poor fluidity and cannot be applied when the slurry is applied to the current collector. When the viscosity is excessively low, there are problems that the slurry flows down from the current collector when the slurry is applied to the current collector and cannot be applied well, and migration of the active material occurs after the slurry is applied.
The method for measuring the viscosity is as follows.
CMC is weighed in a 1,000 mL glass beaker and dispersed in 900 mL of distilled water to prepare an aqueous dispersion having a solid content of 1% (w/v). The aqueous dispersion is stirred at 25°C using a stirrer at 600rpm for 3 hours. Thereafter, according to the method of JIS-Z-8803, the viscosity after 3 minutes at a rotation speed of 30 rpm is measured using a B-type viscometer (manufactured by Toki Sangyo Co., Ltd.).
The CMC may be one type or a combination of two or more types of CMCs having different DS values, viscosities, molecular weights, and the like.

(Synthetic Rubber-Based Binder)

As the synthetic rubber-based binder, one or more selected from the group consisting of styrene-butadiene rubber (SBR), nitrile butadiene rubber, methyl methacrylate butadiene rubber, chloroprene rubber, carboxy-modified styrene-butadiene rubber, and latexes of these synthetic rubbers can be used. Among them, styrene-butadiene rubber (SBR) is preferable.
Here, the average particle size (D50) of SBR is preferably 50 to 300 nm, and more preferably 50 to 200 nm. When the average particle size (D50) of the SBR is excessively large, the SBR does not uniformly adhere to the active material, and the binder function deteriorates, and thus there is a problem that the electrical resistance is increased. When the average particle size is excessively small, the SRB covers the active material, and thus there is a problem that the electrical resistance is increased.
The glass transition temperature (Tg) of the SBR is preferably -50°C to 50°C. When the glass transition temperature (Tg) is within the above range, SBR is mixed well with carboxymethyl cellulose and/or a salt thereof contained in the negative electrode mixture composition and the negative electrode additive of the present invention, and has appropriate flexibility when formed into a negative electrode layer, and therefore electrical resistance is less likely to increase.
When CMC and SBR are used in combination as the negative electrode binder, it is preferable to use 50 to 500 parts by mass of SBR with respect to 100 parts by mass of CMC on a solid content basis from the viewpoint of obtaining optimum binder performance.
The content ratio of the negative electrode binder and the negative electrode additive in the negative electrode active material layer is preferably 10 to 250 parts by mass, and more preferably 12 to 200 parts by mass of the negative electrode additive based on 100 parts by mass of the negative electrode binder on a solid content basis from the viewpoint of obtaining optimum binder performance.
The content of the negative electrode binder in the negative electrode active material layer is preferably 0.05 to 10 mass% and more preferably 1 to 7 mass% on a solid content basis.

(Negative Electrode Active Material)

Examples of the negative electrode active material used in the present invention include: graphite materials such as graphite (natural graphite, artificial graphite, and the like), coke, or carbon fiber; elements capable of forming an alloy with lithium, such as silicon-based compounds, Al, Sn, Ag, Bi, Mg, Zn, In, Ge, Pb, and Ti; compounds containing element capable of forming alloy with lithium; composites of an element capable of forming an alloy with lithium, the compound, and carbon and/or the graphite material; and nitrides containing lithium. Among them, graphite materials and silicon-based compounds are preferable, and silicon particles or silicon oxide particles are more preferable as graphite and silicon-based compounds.
The silicon oxide in the present invention is represented by $SiO_x$ ($0 < x \leq 2$). In the present invention, as the negative electrode active material, a composite of a silicon-based compound and a graphite material is more suitable.
When the negative electrode active material is a composite of a graphite material and a silicon-based compound, the blending ratio of the graphite material and the silicon-based compound is preferably 10:90 to 90:10, and more preferably 50:50 to 80:20.
The content of the negative electrode active material in the negative electrode active material layer is usually 90 to 99 mass%, preferably 91 to 99 mass%, more preferably 92 to 99 mass%, still more preferably 95 to 99 mass%, particularly preferably 96 to 99 weight%, and most preferably 98 to 99 mass%.
In addition, the negative electrode active material layer may contain a negative electrode conductive auxiliary agent as necessary. Examples of the negative electrode conductive auxiliary agent include conductive carbon such as carbon black, acetylene black, and Ketjen black. The content of the negative electrode conductive auxiliary agent in the negative electrode active material layer is usually 0.01 to 20 mass% and preferably 0.1 to 10 mass% on a solid content basis.

(Method for Producing Negative Electrode)

The negative electrode of the present invention can be obtained as a negative electrode in which a negative electrode active material layer is formed on a current collector by, for example, obtaining a slurry-like negative electrode mixture composition containing an auxiliary agent such as the negative electrode additive of the present invention, the negative electrode binder, the negative electrode active material, and the negative electrode conductive auxiliary agent used as necessary, and a solvent, and then applying and drying the negative electrode mixture composition to the current collector.
The method for producing the negative electrode mixture composition is not particularly limited. Examples thereof include a method in which the negative electrode additive of the present invention and the negative electrode binder are dissolved or dispersed in a solvent, other materials to be used in the negative electrode mixture composition are added thereto, and mixing is performed while stirring as necessary. In addition, a method may be employed in which the negative electrode additive of the present invention, the negative electrode binder, the negative electrode active material, and an auxiliary agent such as a negative electrode conductive auxiliary agent used as necessary are mixed in advance, a solvent is added thereto, and mixing is performed while stirring as necessary. The properties of the negative electrode mixture composition are also not particularly limited. Examples thereof include a liquid form, a paste form, a slurry form, and the like, and any form may be used.
The solvent used in the negative electrode mixture composition is preferably an aqueous solvent. The type of the aqueous solvent is not particularly limited, and is preferably water, a water-soluble organic solvent, or a mixed solvent thereof, and more preferably water.
The water-soluble organic solvent is an organic solvent that dissolves in water. Examples thereof include methanol, ethanol, 2-propanol, butanol, glycerin, acetone, methyl ethyl ketone, 1,4-dioxane, N-methy-2-pyrrolidone, tetrahydrofuran (THF), N,N-dimethylformamide (DMF), N,N-dimethylacetamide, dimethyl sulfoxide (DMSO), acetonitrile, methyl triglycol succinate diester, acetic acid, and combinations thereof.
When the mixed solvent is used as the aqueous solvent, the amount of the water-soluble organic solvent in the mixed solvent is preferably 10 mass% or more, more preferably 50 mass% or more, and still more preferably 70 mass% or more. The upper limit of the amount is not limited, but is preferably 95 mass% or less, and more preferably 90 mass% or less. The aqueous solvent may contain a water-insoluble organic solvent as long as the effect of the invention is not impaired.
Examples of the method for applying the negative electrode mixture composition onto a current collector include blade coating, bar coating, and die coating, and blade coating is preferable. For example, in the case of blade coating, a method of casting a negative electrode mixture composition on a current collector using a coating device such as a doctor blade is exemplified. In addition, the coating method is not limited to the above specific example, and examples thereof include a method in which the negative electrode mixture composition is discharged and applied onto a current collector, which is wound around a backup roll and travels, from an extrusion type injector having a slot nozzle. In the blade coating,

the negative electrode active material layer is obtained by performing drying by heating (the temperature is, for example, 80 to 120°C, and the heating time is, for example, 4 to 12 hours) or the like and pressurization by roll pressing or the like as necessary after the casting.

The shape of the electrode is not particularly limited, but is usually a sheet shape. The thickness (the thickness of a negative electrode active material layer formed from a negative electrode mixture composition except a current collector portion) in the case of a sheet-like electrode plate depends on the formulation of the composition, production conditions, and the like, and therefore it is difficult to define the thickness, but the thickness is usually 30 to 150 μm.

(Negative Electrode Current Collector)

Any electric conductor that does not cause a fatal chemical change in an electrode or a battery can be used as the current collector.

Examples of the material of the negative electrode current collector include stainless steel, nickel, copper, titanium, carbon, copper, or stainless steel to which carbon, nickel, titanium, or silver is attached. Among them, copper or a copper alloy is preferable, and copper is more preferable.

Examples of the shape of the current collector include a net, a punched metal, a foam metal, and a foil processed into a plate shape, and a foil processed into a plate shape is preferable.

(Lithium Ion Battery)

The secondary battery including the negative electrode of the present invention described above is preferably a lithium ion battery (lithium ion secondary battery).

The lithium ion secondary battery can have a structure in which a positive electrode and a negative electrode are alternately stacked with a separator interposed therebetween and wound many times. In addition, a laminate of a positive electrode, a separator, and a negative electrode wound many times is placed in a battery container, and a nonaqueous electrolyte is injected and sealed to obtain a lithium ion secondary battery.

(Positive Electrode)

The positive electrode has, for example, a positive electrode active material layer on a positive electrode current collector.

The positive electrode active material layer contains any one kind or two or more kinds of positive electrode active materials capable of occluding and releasing lithium ions, and may contain other materials such as a positive electrode binder, a positive electrode conduction auxiliary agent, and a dispersant as necessary. In this case, the details of the positive electrode binder and the positive electrode conduction auxiliary agent are, for example, the same as those of the negative electrode binder and the negative electrode conductive auxiliary agent described above. As the positive electrode binder, polytetrafluoroethylene (PTFE) is also exemplified in addition to carboxymethyl cellulose and/or a salt thereof exemplified as the negative electrode binder, and a synthetic rubber-based binder.

(Positive Electrode Active Material)

As the positive electrode active material, $LiFePO_4$ and $LiMe_xO_y$-based positive electrode active materials (Me means a transition metal containing at least one of Ni, Co, and Mn. x and y mean any numbers) are preferable.

(Positive Electrode Current Collector)

Examples of the material of the positive electrode current collector include metals such as aluminum and stainless steel, and aluminum is preferable.

(Separator)

As the separator, for example, a microporous membrane or a nonwoven fabric made of polyolefin such as polyethylene or polypropylene can be used. The separator can be impregnated with a nonaqueous electrolyte.

(Nonaqueous Electrolyte)

The nonaqueous electrolyte usually contains a lithium salt and a nonaqueous solvent. Examples of the lithium salt include $LiPF_6$, $LiAsF_6$, $LiBF_4$, and $LiClO_4$. Examples of the nonaqueous solvent include ethylene carbonate, diethyl

carbonate, dimethyl carbonate, propylene carbonate, butylene carbonate, and methylethyl carbonate. The nonaqueous solvents may be used singly or in combination of two or more kinds thereof. The concentration of the lithium salt in the nonaqueous electrolyte can be usually used at a concentration of 0.5 to 2.5 mol/L.

The shape of the lithium ion secondary battery is not particularly limited, and a cylindrical shape, a square shape, a flat shape, a coin shape, a button shape, a sheet shape, or the like can be adopted. The material of the battery container is not particularly limited as long as the purpose of preventing entry of moisture into the battery can be achieved, and examples thereof include a laminate of metal, aluminum, or the like.

The negative electrode additive of the present invention contains a lignin component containing at least a lignin derivative, and the mass ratio of the extracted component amount to the methoxy group amount per solid content of the lignin component is within a specific range. Therefore, even when using SiOx, which is known to expand and contract with charge and discharge as a negative electrode active material, the negative electrode containing this negative electrode additive suppresses structural destruction associated with expansion and contraction, and a lithium ion battery using this negative electrode is excellent in characteristics such as discharge capacity.

## Examples

Hereinafter, embodiments of the present invention will be described with reference to examples, but the present invention is not limited thereto.

### <Measurement Method and Evaluation Method>

In Examples and Comparative Examples, measurement and evaluation were performed as follows.

(Methoxy Group Amount)

The methoxy group amounts of the lignin derivative produced in Examples and Comparative Examples were measured by a methoxy group quantification method (refer to "Lignin Chemistry Research Method", pp. 336 to 340, 1994, published by Japan UNI Agency, Inc.) by Viebock and Schwappach Method.

(Extracted Component Amount)

The extracted component amount was measured by the method for measuring a hexane extractable materials described in JIS K 0102:2019.

(S Content)

The S content of the sulfo group ($-SO_3M$) of the lignin derivatives produced in Examples and Comparative Examples was determined by the following formula.

S content (mass%) = total S content (mass%) - inorganic S content (mass%)

(The S contents in the formula all indicate the S content relative to the solid content of the lignin sample.)

In the formula, the total S content was quantified by ICP emission spectroscopy. In addition, for the calculation of the inorganic S content, the total amount of the $SO_3$ ion content, the $SO_4$ ion content, and the $S_2O_3$ ion content quantified by ion chromatography was used for the calculation.

(Total Decomposition Product Yield by Alkaline Nitrobenzene Oxidation)

The measurement of the total decomposition product yield by alkaline nitrobenzene oxidation of the lignin derivatives produced in Examples and Comparative Examples was performed by the method described in "Plant Cell Wall Experimental Methods" ("Plant Cell Wall Experimental Methods", pp. 128 to 131, 2016, published by Hirosaki University Press). The total decomposition product yield was determined from the ratio (w/w%) of the total weight of the six decomposition products (p-hydroxybenzaldehyde, p-hydroxybenzoic acid, vanillin, vanillic acid, syringaldehyde, syringic acid) obtained by measurement to the sample solid content.

(Discharge Capacity (Charge-Discharge Rate Test))

For the charge-discharge rate test of the coin type lithium ion secondary batteries prepared in Examples, Comparative Examples, and Reference Examples, BTS2004 manufactured by Nagano Co., Ltd. was used. The test were performed in a thermostatic bath at 25°C using the coin type lithium ion secondary battery. One charge-discharge cycle consisted of a charging treatment followed by a discharging treatment, and a total of 52 cycles were carried out. As a condition of the charging treatment, a constant current constant voltage (CC-CV) method (CC current 0.2 C, CV voltage 4.2 V, termination current 0.02 C) was used in all cycles.

As a condition of the discharging treatment, the termination voltage was set to 3.0 V. In the first 1 cycle, the constant current of the discharging treatment was performed at 0.2 C, and the discharge capacity (mAh/g) after 1 cycle was measured after the discharge.

Until the 52-nd cycle thereafter, a constant current of the discharging treatment was set as described below, and the discharge capacity (mAh/g) was measured after the discharge in each cycle.

(Constant Current of Discharging Treatment in Each Cycle)

Cycles 2 to 10: constant current of 0.2 C in discharging treatment
Cycles 11 to 20: constant current of 1 C in discharging treatment
Cycle 21: constant current of 0.2 C in discharging treatment
Cycles 22 to 31: constant current of 2 C in discharging treatment
Cycle 32: constant current of 0.2 C in discharging treatment
Cycles 33 to 42: constant current of 3 C in discharging treatment
Cycles 43 to 52: constant current of 0.2 C in discharging treatment

(Capacity Retention Ratio)

The capacity retention ratio was calculated from the discharge capacity (mAh/g) in each cycle test described above by the formula "capacity retention ratio = discharge capacity after Cycle 52 (mAh/g)/discharge capacity after Cycle 1 (mAh/g) $\times$ 100". The results are shown in Table 1.

(Example 1)

(Production of Highly Modified Lignin Derivative)

Wood chips (radiator pine) were subjected to a sulfite treatment based on the sulfite pulping method. In the sulfite treatment, a solution of sodium sulfite having a $SO_2$ concentration of 4 g/100 mL was used, the temperature was 140°C, the pH was 2, and the treatment time was 4 hours. Next, the intermediate composition was filtered and dehydrated to obtain a filtrate 1 and pulp (sulfite treated product). Subsequently, the pulp was suspended in 5 mass% of NaOH (based on solid content of pulp) and then treated with alkali, and then filtered to separate the alkali treated pulp and the alkali treated extract, thereby obtaining an alkali treated extract 1 as a filtrate. The alkali treatment was performed under conditions of contact with 5 mass% of NaOH (based on solid content of pulp) and treatment at 100°C for 2 hours.

The obtained filtrate 1 and the alkali treated extract 1 were mixed such that the ratio of the filtrate 1/the alkali treated extract 1 was 9/1 in terms of a solid content mass ratio to obtain a raw material 1. The obtained raw material 1 was concentrated with a rotary evaporator until the solid content reached 50%. The pH of the solution was then adjusted to pH 4.5 with NaOH and powdered with a spray dryer. The obtained powder was dissolved in water to prepare an aqueous solution having a solid content of 25%, and the solution was adjusted to pH 13 with 40% NaOH, and then subjected to alkali air oxidation at 160°C for 120 minutes. Thereafter, 70% sulfuric acid was added to adjust the pH to 3, and the precipitate was fractionated and precipitated. The obtained precipitate was washed with water until the filtrate became neutral, 20 parts of the precipitate was suspended in 80 parts of water, and after heating to 60°C, 40% NaOH was added with stirring until the pH reached 9 to completely dissolve the precipitate. The obtained solution was powdered with a spray dryer to obtain a highly modified lignin derivative A (methoxy group amount: 11.9 mass%, extracted component amount: 0.7 mass%, extracted component amount/methoxy group amount: 0.06, S content of sulfo group: 1.6 mass%, total decomposition product yield by nitrobenzene oxidation: 7.1%).

(Production of Negative Electrode Mixture Composition)

SiOx as a negative electrode active material, acetylene black (manufactured by Stream Chemical) as a conductive auxiliary agent, carboxymethyl cellulose (manufactured by Nippon Paper Industries Co., Ltd., MAC500LC) (DS value: 0.65 mol/C6, 1% viscosity: 4,700 mPa·s), highly modified lignin derivative A, and styrene-butadiene rubber (SBR, manufactured by ENEOS Materials Corporation, product number TRD104A) were mixed such that the solid mass ratio was 97:0.5:0.67:0.33:1.5, water was added such that the slurry concentration was 45.6 mass%, and the mixture was thoroughly stirred using a Mazerustar (manufactured by Kurabo Industries, Ltd., KK-250S) to obtain a slurry-like negative electrode mixture composition.

(Preparation of Negative Electrode Plate)

The slurry-like negative electrode mixture composition was applied to a copper foil (manufactured by Furukawa Electric Co., Ltd., NC-WS) having a length of 320 mm × a width of 170 mm × a thickness of 17 μm by an applicator, air-dried for 30 minutes, and then dried at 60°C for 30 minutes by a dryer. Further, pressing was performed under conditions of a roll circumferential speed of 50 m/min at 5 kN using a small tabletop roll press (manufactured by Tester Sangyo Co., Ltd., SA-602) to obtain a negative electrode plate having a basis weight of 19.7 g/$m^2$ and an effective discharge capacity of 2,100 mAh/g.

(Preparation of Coin Type Lithium Ion Secondary Battery)

The obtained negative electrode plate and $LiCoO_2$ positive electrode plate (manufactured by NEI, basis weight: 20.56 mg/$cm^2$, capacity: 3 mAh/$cm^2$) were punched into a circle having a diameter of 16 mm, and the punched negative electrode plate and positive electrode plate were vacuum-dried at 120°C for 12 hours.

Similarly, a separator (manufactured by CS Tech, polypropylene separator with a thickness of 20 μm m) was punched into a circle having a diameter of 17 mm, and vacuum-dried at 60°C for 12 hours.

Thereafter, a negative electrode plate was placed in a stainless steel circular dish type container having a diameter of 20.0 mm, then a separator, a positive electrode plate, a spacer (diameter 15.5 mm, thickness 1 mm), and a stainless steel washer (manufactured by Hohsen Corp.) were stacked in this order, and then 300 μL of an electrolytic solution (1 mol/L of $LiPF_6$, volume ratio of ethylene carbonate to diethyl carbonate 1:1) was added to the circular dish type container. This was covered with a stainless steel cap via a polypropylene packing, and sealed with a coin battery crimping machine (Hohsen orp.) to obtain a coin type lithium ion secondary battery.

(Example 2)

(Production of Highly Modified Lignin Derivative)

Wood chips (radiator pine) were subjected to a sulfite treatment based on the sulfite pulping method. In the sulfite treatment, a solution of sodium sulfite having a $SO_2$ concentration of 2.5 g/100 mL was used, the temperature was 140°C, the pH was 3, and the treatment time was 4 hours. Next, the intermediate composition was filtered and dehydrated to obtain a filtrate 2 and pulp (sulfite treated product). Subsequently, the pulp was suspended in 5 mass% of NaOH (based on solid content of pulp) and then treated with alkali, and then filtered to separate the alkali treated pulp and the alkali treated extract, thereby obtaining an alkali treated extract 2 as a filtrate. The alkali treatment was performed under conditions of contact with 5 mass% of NaOH (based on solid content of pulp) and treatment at 100°C for 2 hours.

The obtained filtrate 2 and the alkali treated extract 2 were mixed such that the ratio of the filtrate 2/the alkali treated extract 2 was 9/1 in terms of a solid content mass ratio to obtain a raw material 2. The obtained raw material 2 was concentrated with a rotary evaporator until the solid content reached 50%. The pH of the solution was then adjusted to pH 4.5 with NaOH and powdered with a spray dryer. The obtained powder was dissolved in water to prepare an aqueous solution having a solid content of 25%, and the solution was adjusted to pH 12 with 40% NaOH, and then subjected to alkali air oxidation at 150°C for 120 minutes. Thereafter, 70% sulfuric acid was added to adjust the pH to 3, and the precipitate was fractionated and precipitated. The obtained precipitate was washed with water until the filtrate became neutral, 20 parts of the precipitate was suspended in 80 parts of water, and after heating to 60°C, 40% NaOH was added with stirring until the pH reached 9 to completely dissolve the precipitate. The obtained solution was powdered with a spray dryer to obtain a highly modified lignin derivative B (methoxy group amount: 11.8 mass%, extracted component amount: 1.1 mass%, extracted component amount/methoxy group amount: 0.10, S content of sulfo group: 2.7 mass%, total decomposition product yield by nitrobenzene oxidation: 8.9%).

The production of a negative electrode mixture composition, the preparation of a negative electrode plate, and the production of a coin type lithium ion secondary battery were performed in the same manner as in Example 1 except that

the highly modified lignin derivative B was used instead of the highly modified lignin derivative A.

(Example 3)

(Production of Highly Modified Lignin Derivative)

The raw material 1 containing the alkali treated extract 1 prepared in Example 1 was concentrated on a rotary evaporator until the solid content was 50%. The pH of the solution was then adjusted to pH 4.5 with NaOH and powdered with a spray dryer. The obtained powder was dissolved in water to prepare an aqueous solution having a solid content of 25%, and dialyzed for 3 days using a dialysis membrane (molecular weight fraction: 20,000, spectra/pore cellulose ester dialysis tube). The solution in the dialysis tube was collected, concentrated until the stock solution amount reached 25%, and powdered with a spray dryer to obtain a dialyzed product 1.

In a 3 L autoclave equipped with a stirrer and a temperature controller, a predetermined amount of the following substances including the dialyzed product 1 was charged.

Dialyzed product 1: 500 g
Sodium hydroxide: 75 g
Water: 1,500 g

The mixed solution was heated to 140°C under stirring and then held for 2 hours, then cooled to 70°C, and air was blown at 500 mL/min for 3 hours. The obtained solution was powdered with a spray dryer to obtain a highly modified lignin derivative C (methoxy group amount: 9.7 mass%, extracted component amount: 0.2 mass%, extracted component amount/methoxy group amount: 0.02, S content of sulfo group: 5.6 mass%, total decomposition product yield by nitrobenzene oxidation: 7.1%).

The production of a negative electrode mixture composition, the preparation of a negative electrode plate, and the production of a coin type lithium ion secondary battery were performed in the same manner as in Example 1 except that the highly modified lignin derivative C was used instead of the highly modified lignin derivative A.

(Example 4)

(Production of Highly Modified Lignin Derivative)

Wood chips (radiator pine) were subjected to alkali treatment based on a kraft pulping method. The alkali treatment was performed using a rotary reactor under the following conditions. Active alkali (to bone-dry chip): 20%, degree of sulfurization: 25%, liquid ratio: 3.2 L/kg, reaction temperature: 165°C, reaction time: 180 minutes. In the preparation of the reaction liquid used for the alkali treatment, sodium hydroxide and sodium sulfide were dissolved in water to have an active alkali concentration of 50 g/L. After the reaction, filtration was performed to obtain an alkali treated extract 3 as a filtrate. Carbon dioxide passed through the alkali treated extract 3 to lower the pH of the black liquor to 10, and primary filtration was performed. The precipitate obtained by the primary filtration was dispersed in ion-exchanged water, and sulfuric acid was added dropwise to lower the pH to 2 to perform secondary filtration. The precipitate obtained by the secondary filtration was washed with water and then dried to obtain a filtered precipitate 1.

A 1 L separable flask equipped with a thermometer, a stirrer, and a reflux condenser was charged with 500 parts of a solution obtained by dissolving the dried filtered precipitate 1 in pH 10 with 40% NaOH to have a solid content of 17%, 17 parts of sodium sulfite, and 12 parts of a 37% formaldehyde solution, and the mixture was reacted at 95°C for 24 hours under stirring. After cooling to room temperature, the obtained solution was powdered with a spray dryer to obtain a highly modified lignin derivative D (methoxy group amount: 10.1 mass%, extracted component amount: 1.0 mass%, extracted component amount/methoxy group amount: 0.10, S content of sulfo group: 4.4 mass%, total decomposition product yield by nitrobenzene oxidation: 4.7%).

The production of a negative electrode mixture composition, the preparation of a negative electrode plate, and the production of a coin type lithium ion secondary battery were performed in the same manner as in Example 1 except that the highly modified lignin derivative D was used instead of the highly modified lignin derivative A.

(Example 5)

(Production of Highly Modified Lignin Derivative)

Wood chips (radiator pine) were subjected to alkali treatment based on a soda pulping method. The alkali treatment was performed using a rotary reactor under the following conditions. Sodium hydroxide was added to the rotary

reactor containing the chips such that the concentration was 25 w/w% based on the solid content of the chips, anthraquinone was added such that the concentration was 0.02 w/w% based on the solid content of the chips, and ion-exchanged water was added to make the liquid ratio 5.0 L/kg. Next, the mixture was heated to 160°C and reacted for 4 hours by blowing steam thereinto while rotating the mixture. After the reaction, filtration was performed to obtain an alkali treated extract 4 as a filtrate. Sulfuric acid was added dropwise to the alkali treated extract 4 to lower the pH to 2, and filtration was performed. The precipitate obtained by filtration was washed with water and then dried to obtain a filtered precipitate 2.

A 1 L separable flask equipped with a thermometer, a stirrer, and a reflux condenser was charged with 500 parts of a solution obtained by dissolving the dried filtered precipitate 2 in pH 10 with 40% NaOH to have a solid content of 17%, 8.5 parts of sodium sulfite, and 6.0 parts of a 37% formaldehyde solution, and the mixture was reacted at 95°C for 24 hours under stirring. After cooling to room temperature, the obtained solution was powdered with a spray dryer to obtain a highly modified lignin derivative E (methoxy group amount: 10.6 mass%, extracted component amount: 1.0 mass%, extracted component amount/methoxy group amount: 0.09, S content of sulfo group: 3.0 mass%, total decomposition product yield by nitrobenzene oxidation: 3.7%).

The production of a negative electrode mixture composition, the preparation of a negative electrode plate, and the production of a coin type lithium ion secondary battery were performed in the same manner as in Example 1 except that the highly modified lignin derivative E was used instead of the highly modified lignin derivative A.

(Comparative Example 1)

(Production of Lignin Sulfonate)

The filtrate 1 obtained in Example 1 was concentrated with a rotary evaporator until the solid content reached 50%. The pH of the solution was then adjusted to pH 4.5 with NaOH and powdered with a spray dryer. The obtained powder was dissolved in water to prepare an aqueous solution having a solid content of 25%, and dialyzed for 3 days using a dialysis membrane (molecular weight fraction: 20,000, spectra/pore cellulose ester dialysis tube). The solution in the dialysis tube was collected, concentrated until the stock solution amount reached 25%, and powdered with a spray dryer to obtain lignin sulfonate of Comparative Example 1 (methoxy group amount: 11.1 mass%, extracted component amount: 0.03 mass%, extracted component amount/methoxy group amount: 0.003, S content of sulfo group: 6.7 mass%, total decomposition product yield by nitrobenzene oxidation: 16.0%).

The production of a negative electrode mixture composition, the preparation of a negative electrode plate, and the production of a coin type lithium ion secondary battery were performed in the same manner as in Example 1 except that the lignin sulfonate of Comparative Example 1 obtained as described above was used instead of the highly modified lignin derivative A.

(Reference Example)

A negative electrode mixture composition was produced in the same manner as in Example 1 except that the highly modified lignin derivative A was not added in the production of the negative electrode mixture composition. SiOx as a negative electrode active material, acetylene black (manufactured by Stream Chemical) as a conduction auxiliary agent, carboxymethyl cellulose (manufactured by Nippon Paper Industries Co., Ltd., MAC500LC) (DS value: 0.65 mol/C6, 1% viscosity: 4,700 mPa·s), and styrene-butadiene rubber (SBR, manufactured by ENEOS Materials Corporation, product number TRD104A) were mixed such that the solid content mass ratio was 97:0.5:1.0:1.5. Using this, the preparation of a negative electrode plate and the production of a coin type lithium ion secondary battery were performed in the same manner as in Example 1 to prepare a blank.

[Table 1]

| | Sample | Alkali treated extract | Methoxy group amount | Extracted component amount | Extracted component amount /Methoxy group amount | S content of sulfo group | Total decomposition product yield by nitrobenzene oxidation | Discharge capacity | | Capacity retention ratio |
|---|---|---|---|---|---|---|---|---|---|---|
| | | | | | | | | Before test | After 52 cycles | |
| | | | mass% | mass% | | mass% | % | mAh/g | mAh/g | % |
| Example 1 | Highly modified lignin derivative A | Partially used for raw material | 11.9 | 0.7 | 0.06 | 1.6 | 7.1 | 1227 | 758 | 62 |
| Example 2 | Highly modified lignin derivative B | Partially used for raw material | 11.8 | 1.1 | 0.10 | 2.7 | 8.9 | 1241 | 869 | 70 |
| Example 3 | Highly modified lignin derivative C | Partially used for raw material | 9.7 | 0.2 | 0.02 | 5.6 | 7.1 | 1292 | 890 | 69 |
| Example 4 | Highly modified lignin derivative D | Entirely used for raw material | 10.1 | 1.0 | 0.10 | 4.4 | 4.7 | 1130 | 724 | 64 |
| Example 5 | Highly modified lignin derivative E | Entirely used for raw material | 10.6 | 1.0 | 0.09 | 3.0 | 3.7 | 1232 | 802 | 65 |
| Comp. Example 1 | Lignin sulfonate | Not used | 11.1 | 0.03 | 0.003 | 6.7 | 16.0 | 1229 | 380 | 31 |
| Ref. Example (blank) | - | - | - | - | - | - | - | 1097 | 72 | 7 |

As shown in Table 1, it is found that the battery using the lignin sulfonate of Comparative Example 1 is improved in capacity retention ratio as compared with the blank, but does not have sufficient performance. However, it can be seen that the battery using the highly modified lignin derivatives A to E of Examples 1 to 5 containing a large amount of the extracted component clearly improves the capacity retention ratio of the battery as compared with the battery using the lignin sulfonate of Comparative Example 1 containing only a small amount of the extracted component.

For the purpose of examining the cause of the difference in the degree of improvement in battery performance between Examples 1 to 5 and Comparative Example 1, a film of an electrode binder was prepared, and the characteristics of the film were evaluated.

(Preparation of Electrode Binder Film)

The carboxymethyl cellulose MAC500LC was adjusted by adding water to have a solid content concentration of 1% (w/v) and a lignin derivative (any of the highly modified lignin derivatives A to E obtained in Examples 1 to 5 or the lignin sulfonate obtained in Comparative Example 1) to have a solid content concentration of 0.5% (w/v), then glycerol was added to be 50 mass% in terms of solid content relative to the carboxymethyl cellulose, and the mixture was stirred well until dissolved.

Subsequently, defoaming was performed using a maselster (manufactured by Kurabo Industries, Ltd., KK-250S), 80 g of the mixture was poured into a polytetrafluoroethylene petri dish having a diameter of 14 cm, the mixture was caused to flow over the entire surface of the petri dish such that air bubbles did not enter the petri dish, and then the mixture was dried at 30°C for 30 hours using a blower dryer to obtain a film.

(Evaluation of Film)

The electrode binder film obtained as described above was allowed to stand still in a room maintained at a room temperature of 23°C and a humidity of 50%, moistened for a whole day and night, cut into a width of 1.5 cm, and then subjected to a tensile test with a Tensilon universal tester. The test was performed under the conditions of a distance between samples of 5 cm and a speed of 1 cm/min, and the elongation at break (elongation rate) and the tensile strength were obtained. The results are shown in Table 2.

[Table 2]

| | Sample | Alkali treated extract | Film characteristics | |
|---|---|---|---|---|
| | | | Elongation at break | Tensile strength |
| | | | % | kN/m |
| Example 1 | Highly modified lignin derivative A | Partially used for raw material | 28.9 | 3.1 |
| Example 2 | Highly modified lignin derivative B | Partially used for raw material | 30.1 | 2.5 |
| Example 3 | Highly modified lignin derivative C | Partially used for raw material | 28.1 | 2.7 |
| Example 4 | Highly modified lignin derivative D | Entirely used for raw material | 34.2 | 2.8 |
| Example 5 | Highly modified lignin derivative E | Entirely used for raw material | 34.0 | 3.0 |
| Comp. Example 1 | Lignin sulfonate | Not used | 21.5 | 2.6 |

As shown in Table 2, it can be seen that the film using lignin sulfonate of Comparative Example 1 has obviously lower elongation at break (elongation rate) than the film using the highly modified lignin derivatives A to E of Examples 1 to 5. It is known that the negative electrode active material (SiOx) expands and contracts with charging and discharging, and structural destruction due to this expansion and contraction contributes to a decrease in the capacity retention ratio of the battery. The reason why the battery using the lignin sulfonate of Comparative Example 1 is inferior in battery performance to the battery using the highly modified lignin derivatives A to E of Examples 1 to 5 is that since the elongation at break of the film of the electrode binder is low, structural destruction due to expansion and contraction associated with charge and discharge proceeds more than the highly modified lignin derivatives A to E of Examples 1 to 5. As a result, it is considered that the capacity retention ratio is reduced. On the other hand, in the highly modified lignin derivatives A to E of Examples 1 to 5 in which a large amount of the extracted component was contained, which resulted in a high elongation at break in the film of the electrode binder, even when expansion and contraction associated with charge and discharge occurred, a structure having a high elongation rate, that is, high flexibility could be formed, and therefore it is considered that the structural destruction did not proceed so much and a high capacity retention ratio could be maintained. In the highly

modified lignin derivatives of Examples 1 to 5, an alkali treated extract was used as a part or the whole of the raw material, and the alkali treated extract contains a large amount of resin acids (for example, abietic acid) having the same six-membered ring structure as that of the lignin derivative and those having an aromatic ring as extracted components. The reason why the film containing the highly modified lignin derivatives A to E could form a highly flexible structure is considered to be that the highly modified lignin derivative and the extracted component contained in the alkali treated extract interact with each other, such that each of the lignin derivative and the alkali treated extract was highly oriented in the battery negative electrode to form a flexible structure.

## Claims

**1.** A negative electrode additive for a secondary battery, the additive comprising a lignin component containing at least a lignin derivative, wherein

a mass ratio of an extracted component amount to a methoxy group amount per solid content of the lignin component is 0.005 to 0.25,
an extracted component amount per solid content of the lignin component is 0.05 to 2.5 mass%, and
a methoxy group amount per solid content of the lignin component is 3 to 18 mass%.

**2.** The negative electrode additive according to claim 1, wherein a total decomposition product yield by alkaline nitrobenzene oxidation per solid content of the lignin component is 15% or less.

**3.** The negative electrode additive according to claim 1, wherein the lignin derivative has a functional group represented by Formula (1) below, and an S content in the functional group is 1.0 to 6.5 mass%.

Formula (1): $-SO_3M$

(In the formula, M represents a hydrogen atom, a monovalent metal, or a divalent metal)

**4.** A negative electrode for a secondary battery, comprising a negative electrode active material layer containing the negative electrode additive according to claim 1, a negative electrode binder, and a negative electrode active material.

**5.** A secondary battery comprising the negative electrode according to claim 4.

**6.** The negative electrode additive according to claim 1, wherein the secondary battery is a lithium ion battery.

## INTERNATIONAL SEARCH REPORT

International application No.
**PCT/JP2023/037627**

**A. CLASSIFICATION OF SUBJECT MATTER**

***H01M 4/62***(2006.01)i; ***H01M 4/13***(2010.01)i
FI: H01M4/62 Z; H01M4/13

According to International Patent Classification (IPC) or to both national classification and IPC

**B. FIELDS SEARCHED**

Minimum documentation searched (classification system followed by classification symbols)

H01M4/62; H01M4/13

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2006-169134 A (THE FURUKAWA BATTERY CO., LTD.) 29 June 2006 (2006-06-29) claims | 1-6 |
| A | WO 2020/013112 A1 (NIPPON PAPER INDUSTRIES CO., LTD.) 16 January 2020 (2020-01-16) claims | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/037627**

| Patent document cited in search report | Publication date (day/month/year) | Patent family member(s) | Publication date (day/month/year) |
|---|---|---|---|
| JP 2006-169134 A | 29 June 2006 | (Family: none) | |
| WO 2020/013112 A1 | 16 January 2020 | US 2021/0265635 A1<br>claims<br>EP 3823067 A1<br>CN 112335081 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3544099 A
- WO 2006038863 A
- WO 2006031175 A
- WO 2012005677 A
- US 2680113 A

### Non-patent literature cited in the description

- Biodegradation resistance of wood by extracted components. *Wood Storage*, 2008, vol. 34 (2), 48-54
- **VIEBOCK** ; **SCHWAPPACH METHOD**. Lignin Chemistry Research Method. Japan UNI Agency, Inc, 1994, 336-340
- Plant Cell Wall Experimental Methods. Hirosaki University Press, 2016, 128-131